# EUROPÄISCHE PATENTSCHRIFT

(11) **EP 0 941 295 B1**
(45) Veröffentlichungstag und Bekanntmachung des Hinweises auf die Patenterteilung: **12.11.2003**
(21) Anmeldenummer: 97952852.8
(22) Anmeldetag: 02.12.1997
(51) Int. Cl.: C09D 163/00, B05D 7/14

(54) **VERFAHREN ZUR BESCHICHTUNG VON SUBSTRATEN, VORZUGSWEISE AUS METALL**
METHOD FOR COATING SUBSTRATES, PREFERABLY WITH METAL
PROCEDE POUR RECOUVRIR DES SUBSTRATS, DE PREFERENCE EN METAL

(30) Priorität: 04.12.1996 DE 19650157
(43) Veröffentlichungstag der Anmeldung: 15.09.1999
(73) Patentinhaber: BASF Coatings AG, 48165 Münster (DE)
(72) Erfinder: WEGNER, Egon, D-48143 Münster (DE); CLAUSEN-MEIRING, Ulrike, D-59229 Ahlen (DE); GROSSE BRINKHAUS, Karl-Heinz, D-48301 Nottuln (DE); JANDEL, Lothar, D-48165 Münster (DE); BREMSER, Wolfgang, D-48165 Münster (DE); WILKE, Guido, D-48153 Münster (DE); DRESCHER, Dorothe, D-48356 Nordwalde (DE); BÜRSTINGHAUS, Rainer, D-48291 Telgte (DE); OTT, Günther, D-48167 Münster (DE)
(74) Vertreter: Fitzner, Uwe, Dr.
(86) Internationale Anmeldenummer: EP9706736
(87) Internationale Veröffentlichungsnummer: WO98024857

(56) Entgegenhaltungen:
- WO-A-95/26373
- US-A- 3 707 526
- US-A- 4 507 412
- DATABASE WPI Section Ch, Week 9424 Derwent Publications Ltd., London, GB; Class A21, AN 94-197344 XP002900039 & JP 06 136 303 A (SHINTO TORYO KK)
- DATABASE WPI Section Ch, Week 8729 Derwent Publications Ltd., London, GB; Class A28, AN 87-202058 XP002900040 & JP 62 129 363 A (KANSAI PAINT CO LTD)

## Beschreibung

Die vorliegende Erfindung betrifft ein Verfahren zur Beschichtung von Substraten, vorzugsweise aus Metall.

Bereits zu Beginn dieses Jahrhunderts sind viele der heute üblichen Verfahren zur Herstellung von Oberflächen veredeltem Band und Blech entwickelt worden. In den 30-ger Jahren kam dann in Europa mit der elektrolytischen Verzinkung (Weißblech) und der Feuerverzinkung breiter Bänder der wesentliche Durchbruch. Seit 1959, als die erste Feuerverzinkungsanlage in Betrieb genommen wurde, gibt es in Deutschland ein zunehmendes Angebot von Oberflächen veredeltem Feinblech, beginnend mit den Standarderzeugnissen und den in den 70-ger und 80-ger Jahren zahlreichen weiteren Varianten.

In den letzten Jahren hat die Blech verarbeitende Industrie derartige Flacherzeugnisse mit metallischen Überzügen und/oder organischen Beschichtungen im steigenden Maß eingesetzt. Fortschritte bei der Anlagentechnik, auf dem Werkstoffgebiet und dem Verarbeitungsverfahren haben die Umstellung von Stückveredelung auf das vorveredelte Blech oder die Kombination beider begünstigt. Die immer komplexer werdenden Anforderungen an die Werkstoffe haben dazu geführt, daß die Vorteile des Trägerwerkstoffes Stahl, z.B. Festigkeit, Umformbarkeit und Schweißeignung, mit den spezifischen neuen Eigenschaften, z.B. Korrosionsbeständigkeit und dekoratives Aussehen, zu verbinden.

Die Einsatzgebiete der mittels dieser Verfahren (sogenanntes coil-coating) beschichteten Bleche sind sehr vielfältig. Für den Architekturbereich gibt es zahllose Anwendungen. Ebenso finden beschichtete Bleche in dem Bauinnenbereich für Wände, Möbel, Lampen und elektrische Haushaltsgeräte Verwendung. Eine zunehmende Anwendungspalette ergibt sich ferner im Fahrzeugbau. LKW-Aufbauten und Automobilanbauteile werden vielfach aus vorbeschichteten Materialien gefertigt Wohnwagen und Aufbauten für Wohnmobile werden fast ausnahmslos aus beschichteten Blechen hergestellt.

Aufgrund der aufgezeigten Anwendungsbereiche ergeben sich vielfältige Anforderungen an die Beschichtungen der Bleche. Insbesondere muß eine große Flexibilität und Umformbarkeit mit einer hervorragenden Haftung der Beschichtung verbunden werden. Dies ist insbesondere dann erforderlich, wenn das beschichtete Material in kleinen Radien gebogen werden muß, z.B bei der Herstellung von Automobilkarosserien.

Gleichzeitig muß ein Werkstoff für die Weiterverarbeitung angeboten werden, der den höchsten Ansprüchen gerecht wird: Dicke, Farbton, Oberflächenbeschaffenheit und Verhalten unter Belastung. Diese Eigenschaften müssen auch beim Biegen sowie Schneiden der Materialien erhalten bleiben.

Für das sogenannte Coil Coating einsetzbare Beschichtungsmaterialien sind beispielsweise aus den US-Patentschriften 4 692 382 und 4 692 383 bekannt. Hierbei handelt es sich um Gemische auf der Basis von Isocyanaten und phosphatierten Polyepoxiden. Die Eigenschaften hinsichtlich der o.g. Anforderungen sind bei diesen Beschichtungen noch nicht voll zufriedenstellend. Dies gilt insbesondere für die Unterwanderung am Schnitt und an Kanten. Ebenso treten immer wieder Haftungsprobleme auf.

### Allgemeine Beschreibung der Erfindung

Aufgabe der vorliegenden Erfindung ist es demgemäß, ein Verfahren zur Beschichtung von Substraten, vorzugsweise aus Metall durch Reinigen der Substratoberfläche, ggfs. Auftragen eines anorganischen oder organischen Vorbehandlungsmittels, Außragen einer Primerschicht, ggfs. Auftragen einer Decklackschicht durch Spritzen, Tauchen, Rakeln, Walzen oder Streichen und anschließendes Einbrennen zur Verfügung zu stellen, bei dem die genannten Nachteile nicht auftreten.

Diese Aufgabe. wird überraschenderweise durch die Bereitstellung von Primern gelöst, die dadurch gekennzeichnet sind, daß sie ein aminmodifiziertes Epoxidharz enthalten, die ein Reaktionsprodukt aus einem Epoxidharz, das mit einer Monophenol- oder thiolverbindung modifiziert worden ist, primären und/oder sekundären Aminen bzw. deren Salzen und/oder Salzen von tertiären Aminen und ggfs. Diolen und/oder Dicarbonsäuren sind.

Die vorliegende. Erfindung betrifft ferner mit einer oder mehreren Schichten beschichtete Substrate, vorzugsweise aus Metall, die dadurch herstellbar sind, indem die Metalloberfläche gereinigt, ggfs. ein anorganisches oder organisches Vorbehandlungsmittel aufgetragen, eine Primerschicht aufgebracht, eine Decklackschicht durch Spritzen, Tauchen, Rakeln, Walzen oder Streichen aufgetragen, anschließend die Schichtung gebrannt und ggfs. eine abziehbare Folie über den Lackfilm geschichtet wird.

Die durch die Erfindung erreichten Vorteile sind im wesentlichen darin zu sehen, daß der erfindungsgemäße Primer keine bzw. nur wenige Oberflächenstörungen zeigt und keine Haftungsprobleme auftreten. Der erfindungsgemäße Primer zeigt überraschenderweise ausgezeichnete Kontaminationsresistenz, d.h. die guten Oberflächeneigenschaften der eingebrannten Schicht bleiben auch dann erhalten, wenn Oberflächenstörungen verursachende Substanzen vorhanden sind.

Weiterhin vorteilhaft ist, daß die erfindungsgemäß beschichteten Substrate von hoher und gleichmäßiger Qualität sind und sich durch hervorragende Eigenschaften hinsichtlich der Umformbarkeit, Haltbarkeit, Widerstandsfähigkeit gegen chemische Substanzen, Korrosions- und Witterungsbeständigkeit auszeichnen. Das beschichtete Material eignet sich daher insbesondere für Bereiche, die eine Biegung kleiner Radien fordern. Demgemäß läßt sich das beschichtete Material besonders gut für die Herstellung von Automobilkarosserien einsetzen. Gleiches gilt für die Flexibilität und Haftung der Beschichtung. Darüber hinaus wird das beschichtete Substrat allen Ansprüchen bezüglich der Dicke des Primers, Farbton, Oberflächenbeschaffenheit und Verhalten unter Belastung gerecht. Besonders vorteilhaft ist die Widerstandsfähigkeit gegen Unterwanderung am Schnitt und an Kanten.

### Substrate

Aufgrund der vielseitigen Verwendung werden verschiedenste Trägermaterialien als Substrat im Coil-Coating eingesetzt. Als erstes Auswahlkriterium müssen die späteren mechanischen Bearbeitungsschritte berücksichtigt werden. Abkanten, Biegen, Tiefziehen erfordern bestimmte Güten und Festigkeiten, die über die entsprechende Stahl- oder Aluminiumlegierung sichergestellt werden. Als weiteres Auswahlkriterium ist das spätere Einsatzgebiet wichtig.

Vielfach werden die Substrate vorbehandelt, insbesondere wenn es sich um metallische Substrate handelt. Als Vorbehandlungsmittel kommen alle dem Fachmann bekannten anorganischen und organischen Produkte in Betracht Ein Beispiel ist der Auftrag einer Phosphatschicht auf das Substrat. Stahlprodukte, die nicht massiven Korrosionsangriffen ausgesetzt sind, können ohne weitere Vorveredlung im Coil Coating-Prozeß verarbeitet werden. Bei höherer Feuchte und klimatischer Belastung wird elektrolytisch verzinktes oder feuerverzinktes Material eingesetzt. Auch in diesen Veredlungsstufen werden - je nach Anwendungszweck - unterschiedliche Qualitätsstandards erzeugt. Außer Stahl ist auch Aluminium ein wichtiger Trägerwerkstoff.

Bei den Metallüberzügen spielen Zink und Aluminium und ihre Legierungen eine überragende Rolle. Die ein oder zweiziffrigen Symbole entsprechen der europäischen Normung: Z steht für Zink (Zn), A für Aluminium (A1), F für Eisen (Fe), N für Nickel (Ni), S für Silicium (Si), E für elektrolytisch und OC für "organic coated". Legierungsüberzüge haben wegen der sich bietenden Möglichkeiten an Bedeutung gewonnen. Neben der normalen Verzinkung spielen hier die aluminiumreichen Varianten Galfan und Galvalume eine wichtige Rolle.

Die wichtigsten Beschichtungsverfahren sind:
1. Das Schmelztauchen, ein Eintauchen des Bandes in das geschmolzene Überzugsmetall (anwendbar bei Metallen mit niedrigerem Schmelzpunkt). Dabei läuft das Band aus dem Glühofen unter Schutzgas unmittelbar in die je nach Metall zwischen rd. 420 und 660°C heiße Schmelze ein. Direkt danach wird am aufsteigenden Band überschüssiges Metall abgeblasen, um die gewünschte Auflage auf beiden Seiten einzustellen, die Oberflächenausbildung gesteuert und abgekühlt Geringe Zusätze von Aluminium von rd. 0,2 % beschränken die Ausbildung einer Legierungsschicht an der Grenze zwischen Stahl und Zinküberzug. Ähnlich wirken sich die Siliciumzusätze bei den aluminiumreichen Überzügen des feueraluminierten Feinbleches aus. Außerdem ist der früher übliche geringe Anteil an Blei (rd. 0,1 %) wegen der Ausbildung der bekannten großen Zinkblume beim feuerverzinkten Blech sehr stark reduziert worden, oder es wird sogar bleifrei gefahren.
   Eine thermische Nachbehandlung des frisch verzinkten Bandes bei etwa 520°C führt ggf. zu Ausführung "galvannealed", bei der der Reinzink-Überzug vollständig in eine Zink-/Eisen-Legierung (entsprechend der Delta-Phase = FeZn₇) mit mattgrauem Aussehen umgewandelt wird. Gelegentlich wird eine der beiden Bandseiten durch Abbürsten vom Reinzink-Überzug befreit; das Erzeugnis, eine fast einseitig feuerverzinkte Variante, ist unter dem Namen "Monogal" bekannt geworden.
   Die Zusammensetzung des Galfan-Überzuges liegt sehr nahe beim Eutektikurn im Zink-Aluminium-System. Beim Mischmetall handelt es sich um rd. 0.05 % ,Cer/Lanthan.
2. Das elektrolytische Abscheiden von Überzügen aus wässerigen Lösungen, meist auf Sulfatbasis, erfolgt gemäß den Faraday'schen Gesetzen. Dabei läuft das Band horizontal, vertikal oder seltener radial an den löslichen oder unlöslichen Anoden vorbei. Auch unterschiedliche Auflagen je Seite oder eine einseitige Abscheidung werden so ermöglicht. Bei der ZnNi-Legierverzinkung werden die ElektrolyseParameter so eingestellt, um die gewünschte Zusamensetzung zu erhalten.
   Zink kann, wie ersichtlich, nach beiden Verfahren aufgebracht werden. Die Überzugsstruktur und einige verfahrensbedingte Gebrauchseigenschaften sind aber unterschiedlich.

Allen Veredelungsverfahren ist gemeinsam, daß der Fertigungsablauf aus der Vorbehandlung der Bandoberfläche, z.B. durch Entfetten und die Bildung von chemischen Konversionsschichten wie Phosphatieren u.ä. (bei der Bandbeschichtung), der eigentlichen Veredelung und der Nachbehandlung besteht. So können (legier-) verzinkte Bänder wahlweise geölt, chemisch nachbehandelt oder organisch versiegelt werden.

### Primer

Auf das ggfs. in der beschriebenen Weise veredelte Substrat wird erfindungsgemäß ein Primer bzw. eine Grundschicht vorzugsweise in einer Schichtdicke von 5 -10 µm aufgetragen. Nach dem ersten Trocknerdurchlauf kann die Decklackierung erfolgen, die nach dem Trocknen in der Regel eine Dicke von etwa 20 µm aufweist. Zum Schutz vor mechanischen Verletzungen kann diese Oberfläche teilweise noch mit einer temporären Schutzfolie im heißen Zustand kaschiert werden. Parallel zu der Sichtseitenbeschichtung werden auch die Rückseiten mitlakkiert, so daß auch hier ein angepaßter Schutzfilm aufgetragen wird.

Der Primer hat die Aufgabe, nach einer dünnschichtigen Applikation einerseits eine sehr gute Verbundhaftung zum Substrat herzustellen und andererseits die Zwischenhaftung zum nachfolgenden Decklack zu gewährleisten. In der richtigen Kombination dieser Haftungseigenschaften ist schließlich die Gebrauchsgüte und der Korrosionsschutz der fertig lackierten Materialien begründet. Entsprechend werden für unterschiedliche Anwendungsgebiete auch verschiedene Primer eingesetzt. Die klassischen Primer basieren auf hochmolekularen, gesättigten Polyesterharzen, die zur Verstärkung der Haftungs- und Korrosionseigenschaften mit aktiven Korrosionsschutzpigmenten kombiniert sind.

Für die unterschiedlichen Anwendungen werden auch verschiedene Primerqualitäten benötigt. Für den Architekturbereich werden beispielsweise mittlere Verformungseigenschaften, gute bis ausgezeichnete Oberflächenhärten und fiir den Auβenbereich ausgezeichnete Korrosionsfestigkeit und Bewitterungsfestigkeit gefordert. Neuerdings wird auch angestrebt, für die Herstellung von Automobilkarosserien vorbeschichtete Bleche einzusetzen, für die die genannten Anforderungen ebenfalls erfüllt werden müssen. Diese Anforderungen werden überraschend durch einen Primer erfüllt, der ein aminmodifiziertes Epoxidharz enthält.

Es sind sowohl selbst als auch fremdvernetzende aminmodifizierte Epoxidharze bekannt. Bevorzugt werden fremdvernetzende aminmodifizierte Epoxidharze eingesetzt Vorzugsweise werden erfindungsgemäß Epoxy-Amin-Addukte in Kombination mit blockierten Polyisocyanaten verwendet.

Unter aminmodifizierten Epoxidharzen werden kationische Reaktionsprodukte aus
(A) modifizierten Polyepoxiden,
(B) primären und/oder sekundären Aminen bzw. deren Salzen und/oder Salzen von tertiären Aminen und gegebenenfalls
(C) Diolen und/oder Dicarbonsäuren
verstanden.

Unter Polyepoxiden werden Verbindungen verstanden, die zwei oder mehr Epoxidgruppen im Molekül enthalten.

Zur Herstellung der aminmodifizierten Epoxidharze sind als Komponente (A) alle Verbindungen geeignet, die zwei oder mehr Epoxidgruppen im Molekül enthalten. Bevorzugt sind solche Verbindungen, die zwei Epoxidgruppen im Molekül enthalten und ein relativ niedriges Molekulargewicht von höchstens 750, bevorzugt 400 bis 500, haben.
Besonders bevorzugte (A)-Komponenten sind Verbindungen, die herstellbar sind durch Umsetzung von
(a) einer Diepoxidverbindung oder eines Gemisches von Diepoxidverbindungen mit einem Epoxidäquivalentgewicht unter 2000 mit
(b) einer unter den gegebenen Reaktionsbedingungen gegenüber Epoxidgruppen monofunktionell reagierenden, eine Phenol- oder Thiolgruppe enthaltenden Verbindung oder eines Gemisches solcher Verbindungen,
wobei die Komponenten (a) und (b) in einem Molverhältnis von 10:1 bis 1:1, bevorzugt 4:1 bis 1,5:1, eingesetzt werden und die Umsetzung der Komponente (a) mit der Komponente (b) bei 100 bis 190 ° C gegebenenfalls in Anwesenheit eines Katalysators durchgeführt wird (vgl. DE-OS-35 18 770).

Weitere besonders bevorzugte (A)-Komponenten sind Verbindungen, die herstellar sind durch eine bei 100 bis 195 ° C gegebenenfalls in Anwesenheit eines Katalysators durchgeführten, durch einen monofunktionell reagierenden Starter, der entweder eine phenolische OH-Gruppe oder eine SH-Gruppe trägt, initiierten Polyaddition einer Diepoxidverbindung und/oder eines Gemisches von Diepoxidverbindungen, gegebenenfalls zusammen mit mindestens einer Monoepoxidverbindung, zu einem Epoxidharz, in dem Diepoxidverbindung und Starter in einem Molverhältnis von größer 2:1 bis 10:1 eingebaut sind (vgl. DE-OS-35 18 732). Polyepoxide, die zur Herstellung der besonders bevorzugten (A)-Komponenten und auch selbst als (A)-Komponenten einsetzbar sind, sind aus Polyphenolen und Epihalohydrinen hergestellte Polyglycidylether von Polyphenolen. Als Polyphenole können z. B. ganz besonders bevorzugt Bisphenol A und Bisphenol F eingesetzt werden. Außerdem sind auch 4,4'-Dihydroxybenzophenon, Bis-(4-hydroxyphenyl)-1, 1-ethan, Bis-(4-hydroxyphenyl)-1,1-isobutan, Bis-(4-hydroxy-tertiärbutylphenyl)2,2-propan, Bis-(2-hydroxynaphthyl)-methan, 1,5-Dihydroxynaphthalin und phenolische Novolakharze geeignet
Weitere geeignete Polyepoxide sind Polyglycidether von mehrwertigen Alkoholen, wie z. B. Ethylenglykol, Diethylenglykol, Triethylenglykol, 1,2-Propylenglykol, 1,4-Propylenglykol, 1,5-Pentandiol, 1,2,6-Hexantriol, Glycerin und Bis-(4-hydroxycyclohexyl-)2,2-propan sowie Neopentylglykol.

In einer bevorzugten Ausfiihrungsform wird das modifizierte Polyepoxidharz hergestellt, indem Bisphenol A, Bisphenol A Diglycidylether und ein Bisphenol A Ethylenoxid Addukt zusammen erhitzt werden und durch Amin-Katalyse das modifizierte Produkt gebildet wird.

Es können auch Polyglycidylester von Polycarbonsäuren, wie z. B. Oxalsäure, Bernsteinsäure, Glutarsäure, Terephthalsäure, 2,6-Naphthalindicarbonsäure, dimerisierte Linolsäure eingesetzt werden. Typische Beispiele sind Glycidyladipat und Glycidylphthalat.

Ferner sind Hydantoinepoxide, epoxidiertes Polybutadien und Polyepoxidverbindungen geeignet, die man durch Epoxidierung einer olefinisch ungesättigten aliphatischen Verbindung erhält.

Unter modifizierten Polyepoxiden werden Polyepoxide verstanden, in denen ein Teil der reaktionsfähigen Gruppen mit einer modifizierenden Verbindung umgesetzt worden ist. Ein Beispiel ist die Modifizierung eines Epoxidharzes mit Monophenol- oder thiolverbindungen.

Als Komponente (B) können primäre und/oder sekundäre Amine bzw. deren Salze und/oder Salze von tertiären Aminen verwendet werden, wobei die sekundären Amine besonders bevorzugte Komponenten (B) sind.

Bevorzugt sollte das Amin eine in Wasser lösliche Verbindung sein. Beispiele solcher Amine sind Mono- und Dialkylamine, wie Methylamin, Ethylamin, Propylamin, Butylamin, Dimethylamin, Diethylamin, Dipropylamin, Methylbutylamin u. dgl.. Geeignet sind ebenfalls Alkanolamine, wie z.B. Methylethanolamin, Diethanolamin u. dgl. Ferner sind Dialkylaminoalkylamine, wie z.B. Dimethylaminoethylamin, Diethylaminopropylamin, Dimethylaminopropylamin und dgl. geeignet. In den meisten Fällen werden niedermolekulare Amine verwendet, doch ist es auch möglich, höhermolekulare Monoamine anzuwenden.

Polyamine mit primätren und sekundären Aminogruppen können in Form ihrer Ketimine mit den Epoxidgruppen umgesetzt werden. Die Ketimine werden aus den Polyaminen in bekannter Weise hergestellt.

Die Amine können auch noch andere Gruppen enthalten, doch sollen diese die Umsetzung des Amins mit der Epoxidgruppe nicht stören und auch nicht zu einer Gelierung der Reaktionsmischung führen.

Die für die Wasserverdünnbarkeit erforderlichen Ladungen können durch Protonisierung mit wasserlöslichen Säuren (z.B., Borsäure, Ameisensäure, Milchsäure oder Essigsäure) oder auch durch Umsetzung der Oxirangruppen mit Salzen eines Amins erzeugt werden.

Als Salz eines Amins kann das Salz eines tertiären Amins verwendet werden.

Der Aminanteil des Amin-Säuresalzes ist ein Amin, das unsubstituiert oder substituiert wie im Falle des Hydroxylamins sein kann, wobei diese Substituenten die Umsetzung des Amin-Säuresalzes mit dem Polyepoxid nicht stören sollen und die Reaktionsmischung nicht gelieren soll. Bevorzugte Amine sind tertiäre Amine, wie Dimethylethanolamin, Triethylamin, Trimethylamin, Triisopropylamin u. dgl. Beispiele von anderen geeigneten Aminen sind in der US-PS 38 39 252 in Spalte 5, Zeile 3, bis Spalte 7, Zeile 42, angegeben.

Als Komponente (C) werden Diolen und/oder Dicarbonsäuren bzw. Gemische aus Verbindungen dieser Stoffidassen eingesetzt.

Als Komponente (C) werden auch aliphatische und/oder alicyclische polyfunktionelle Alkohole oder Carbonsäuren mit einem Molekulargewicht unter 350 eingesetzt. Vorteilhaft weisen diese eine verzweigte aliphatische Kette, insbesondere mit mindestens einer Neostruktur, auf.
Geeignete Verbindungen entsprechen der folgenden allgemeinen 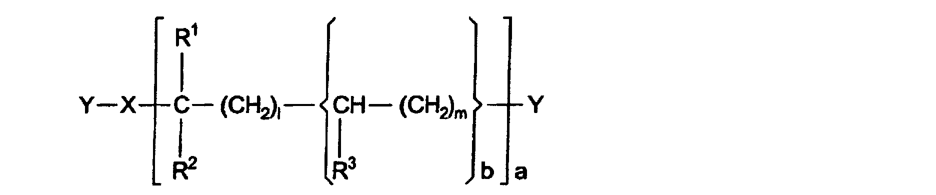 Hierin bedeuten:
Y = OH, COOH
X = (CH₂)ₙ
a = 0; 1
b = 0; 1
I =0-10
m,n =1-10 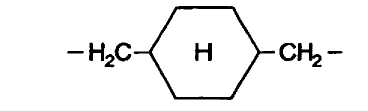 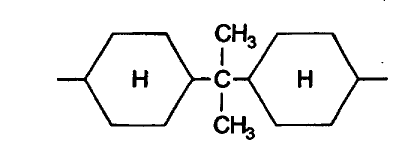
R¹ R² R³ = H, Alkylrest mit 1 bis 5 C-Atomen.

Als Beispiele seien genannt Diole, wie Ethylenglykol, Diglykol, Dipropylenglykol, Dibutylenglykol, Triglykol, 1,2-Propandiol, 1,3-Propandiol, 2,2-Dimethyl-1,3-propandiol, 2,2-Diethyl- 1 ,3-propandiol, 2-Methyl-2-ethyl-1,3-propandiol, 2-Methyl-2-propyl-1,3-propandiol, 2-Ethyl-2-butyl-1,3-propandiol,- 1,2-Butandiol, 1,4-Butandiol, 2,3-Butandiol, 2-Ethyl 1,4-butandiol, 2,2-Diethyl-1,3-butandiol, Buten-2-diol-1,4, 1,2-Pentandiol, 1,5-Pentandiol, 3-Methyl-1,5-pentandiol, 1,6-Hexandiol, 2,5-Hexandiol, 2-Ethyl-1,3-hexandiol, 2,5-Dimethyl-2,5-hexandiol, 1,3-Octandiol, 4,5-Nonandiol, 2,10 Decandiol, 2-Hydroxyethylhydroxyacetat, 2,2-Dimethyl-3hydroxypropyl-2,2-dimethylhydroxypropionat, 2-Methyl-2 propyl-3-hydroxypropyl-2-methyl-2-propylhydroxypropionat, 4,4'-Methylenbiscyclohexanol und 4,4'-Isopropylidenbiscyclohexanol. Einige bevorzugte Diole sind 2,2-Dimethyl-1,3 propandiol, 3-Methyl-1,5-pentandiol, 2,2-Dimethyl-3-hydroxy-propyl-2,2-dimethylhydroxypropionat und 4,41-Isopropylidenbiscyclohexanol.

Als Carbonsäuren kommen eine Vielzahl von Dicarbonsäuren in Betracht, wie Oxalsäure, Malonsäure, 2,2-Dimethylmalonsäure, Bernsteinsäure, Glutarsäure, Adipinsäure, Hexahydrophthalsäure, Maleinsäure, Fumarsäure, Pimelinsäure, Korksäure, Azelainsäure, Sebazinsäure, Itaconsäure, Citraconsäure und Mesaconsäure.

Bevorzugt eingesetzte Dicarbonsäuren sind z.B. 2,2-Dimethylmalonsäure und Hexahydrophthalsäure.

Es können auch langkettige Dicarbonsäuren als Komponente (C) eingesetzt werden. Beispiele hierfür sind Dimerfettsäuren, wie etwa die dimere Linolsäure.

Die aminmodifizierten Epoxidharze können sowohl als fremdvernetzende Kunstharze als auch als selbstvemetzende Kunstharze eingesetzt werden, Selbstvemetzende aminmodifizierte Epoxidharze können beispielsweise durch chemische Modifikation der aminmodifizierten Epoxidharze erhalten werden. Ein selbstvernetzendes System kann z.B. dadurch erhalten werden, daß das aminmodifizierte Epoxidharz mit einem teilblockierten Polyisocyanat, das im Durchschnitt eine freie Isocyanatgruppe pro Molekül besitzt und dessen blockierte Isocyanatgruppen erst bei erhöhten Temperaturen entblockt werden, umgesetzt wird.

Bevorzugte Lacke werden erhalten, wenn als fremdvemetzende aminmodifizierte Epoxidharze in Kombination mit einem geeigneten Vemetzungsmittel eingesetzt werden.

Beispiele für geeignete Vernetzungsmittel sind Phenoplaste, polyfunktionelle Mannichbasen, Melaminharze, Benzoguanaminharze, blockierte Polyisocyanate und Verbindungen, die rnindestens zwei Gruppierungen der allgemeinen Formel R¹-O-CO- enthalten.

Der Rest R¹ bedeutet:
R¹ = R²-O-CO-CH₂-, R³-CHOH-CH₂-, R⁴-CHOR⁵-CHOH-CH₂-
R² = Alkyl
R³ = H, Alkyl, R⁶-O-CH₂- oder R⁶-CO-O-CH₂-
R⁴ = H oder Alkyl
R⁵ = H, Alkyl oder Aryl
R⁶ = Alkyl, Cycloalkyl oder Aryl

Bevorzugte Primer werden erhalten, wenn als Vernetzungsmittel blockierte Polyisocyanate und/oder Verbindungen, die mindestens zwei Gruppierungen der allgemeinen Formel R¹ - O-CO- enthalten, eingesetzt werden.

Als blockierte Polyisocyanate können beliebige Polyisocyanate benutzt werden, bei denen die Isocyanatgruppen mit einer Verbindung umgesetzt worden sind, so daß das gebildete blockierte Polyisocyanat gegenüber Hydroxyl- und Aminogruppen bei Raumtemperatur beständig ist, bei erhöhten Temperaturen, in der Regel im Bereich von etwa 90°C bis etwa 300 ° C, aber reagiert. Bei der Herstellung der blockierten Polyisocyanate können beliebige für die Vernetzung geeignete organische Polyisocyanate verwendet werden. Bevorzugt sind die Isocyanate, die etwa 3 bis 36, insbesondere etwa 8 bis etwa 15 Kohlenstoffatome enthalten. Beispiele geeigneter Diisocyanate sind Hexamethylendiisocyanat, 2,4-Toluylendiisocyanat, 2,6-Toluylendiisocyanat, 1-Isocyanatomethyl 5-isocyanato-1,3,3-trimethylcyclohexan sowie 4,4'-Diisocyanatodiphenylmethan (MDI) und dessen höhermolekulare Homologe, gemeinhin als Fraktionen der MDI-Herstellung bekannt Es können auch Polyisocyanate von höherer Isocyanatfunkbionalität verwendet werden. Beispiele dafür sind trimerisiertes Hexamethylendiisocyanat und trimerisiertes Isophorondiisocyanat. Ferner kann man auch Mischungen von Polyisocyanaten benutzen. Die bei der Erfindung als Vernetzungsmittel in Betracht kommenden organischen Polyisocyanate können auch Präpolymere sein, die sich beispielsweise von einem Polyol einschließlich eines Polyetherpolyols oder eines Polyesterpolyols ableiten.

Für die Blockierung der Polyisocyanate können beliebige geeignete aliphatische, cycloaliphatische oder aromatische Alkylmonoalkohole verwendet werden, Beispiele dafür sind aliphatische Alkohole, wie Methyl-, Ethyl-, Chlorethyl-, Propyl-, Butyl-, Amyl-, Hexyl-, Heptyl-, Octyl-, Nonyl-, 3,3,5-Trimethylhexyl-, Decyl- und Laurylalkohal; cycloaliphatische Alkohole wie Cyclopentanol und Cyclohexanol; aromatische Alkylalkohole, wie Phenylcarbinol und Methylphenylcarbinol.

Andere geeignete Blockierungsmittel sind Hydroxylamine wie Ethanolamin, Oxime wie Methylethylketonoxim, Acetonoxim und Cyclohexanonoxim oder Amine wie Dibutylamin und Diisopropylamin. Die genannten Polyisocyanate und Blockierungsmittel können bei geeigneten Mengenverhältnissen auch zur Herstellung der oben erwähnten teilblockierten Polyisocyanate verwendet werden.

Beispiele fiir Verbindungen, die mindestens zwei Gruppierungen der allgemeinen Formel R¹-O-CO- enthalten, sind Bis(carbalkoxymethyl)azelat, Bis-(carbalkoxymethyl)sebacat, Bis-(carbalkoxymethyl)adipat, Bis-(carbalkoxymethyl)decanat, Bis-(carbalkoxymethyl)terephthalat, Bis-(2-hydroxybutyl)-azelat und Bis-(2-hydroxyethyl)terephthalat.

Das Vernetzungsmittel wird in der Regel in einer Menge von 10 bis 50 Gew.-%, bevorzugt 25 bis 40 Gew.-%, bezogen auf das aminmodifizierte Epoxidharz, eingesetzt. Der Anteil des Epoxid-Harzes liegt dementsprechend bei 90 bis 50 Gew.-%, vorzugsweise 75 bis 60 Gew.-%. Zusätzlich können zur Steigerung der Flexibilität und der Umformbarkeit der Lacke oligomere Polyole zugesetzt werden, die unter den Einbrennbedingungen keine oder eine nur geringe Flüchtigkeit besitzen, und die bei der Vernetzungsreaktion als weichmachende Segmente in das Filmnetzwerk eingebaut werden. Der Anteil dieser oligomeren Polyole auf die Harz-Vemetzer- Mischung kann bis zu 30 Gew.-%, vorzugsweise 2 bis 12 Gew.-% betragen. Beispiele hierfür sind Polyether- und Polyesteralkohole. Eine Klasse von Polyetheralkoholen stellen die Polypropylenglykole, Polyethylenglykole, sowie die Polypropylen-/Polyethylen-Mischdiole, und weiterhin die durch Umsetzung von Monophenolen mit Ethylenoxid und/oder Propylenoxid gewonnenen Polyetherole sowie die aus Bisphenol A und Ethylenoxid und/oder Propylenoxid hergestellten Polyether dar. Bevorzugt sind hieraus Pluriol P600, Plurio P900, Pluriol P2000 (der Fa. BASF), sowie Plastilit 3060 (der Fa. BASF) und ethoxiliertes Bisphenol A. Bevorzugte Polyesteralkohole sind Polycaprolactone wie Capa 200 (Fa. Interox) oder PCP 200 (Fa. Union Carbide).

Die Harz-Vernetzer-Weichmacher-Mischungen können als organische Anlösung durch Verdünnung mit geeigneten Lösungsmitteln zubereitet werden. Kriterium für die Verdünnung ist nicht in erster Linie der Festkörper der Mischung, der zwischen 80 und 50 % liegen kann, sondern die das Fließverhalten der Mischung beschreibende Viskosität. Diese Viskosität wird nach der Auslaufmethode im DIN4-Becher bestimmt. Sie soll für die erfindungsgemäßen Zubereitungen im Bereich zwischen 150 und 50 Sekunden liegen, der bevorzugte Bereich ist 110-70 Sekunden. Selbstredend wird jedoch ein möglichst hoher Festkörper angestrebt.

Eine weitere, bevorzugte Verdünnungsform stellt die wäßrige Lösung/Dispersion der beschriebenen Stoffzusammensetzungen dar, bei der Wasser das dominierende Lösungsmittel darstellt. Hierzu werden die basischen Aminogruppen aus dem aminmodifizierten Epoxidharz durch Neutralisation mit einer Säure in hydrophile Salzgruppen überführt, bevor oder während mit Wasser verdünnt wird. In einer bevorzugten Ausführungsform wird nur ein Teil der Aminogruppen neutralisiert (Neutralisierungsgrad kleiner 100 %). Durch die Unterneutralisation wird die Ausbildung einer transparenten wäßrigen Lösung unterdrückt, und es bildet sich eher eine kolloidale Dispersion aus. Bei gleichem Festkörper besitzt die wäßrige Dispersion eine geringere Viskosität als die vollneutralisierte wäßrige Lösung. Durch gezielte Auswahl des Neutralisationsgrads gelingt es auf diese Weise, einen möglichst hohen Festkörper bei gegebenem Viskositätsrahmen zu erzielen. Andererseits muß der Neutralisationsgrad genügend hoch sein, damit die Lackmischung nicht in zwei Phasen separiert.

Ein weiteres Kriterium stellt der pH-Wert der wäßrigen Lackmischung dar. Bei gegebenem Basengehalt des aminmodifizierten Epoxidharzes bewirkt ein hoher Neutralisationsgrad einen niedrigen pH, während ein niedriger Neutralisationsgrad einen hohen pH bedingt. Bei niedrigem pH ist zwar die chemische/hydrolytische Stabilität und das physikalische Absetzverhalten weniger gefährdet, jedoch ist die geforderte Auslaufviskosität im DIN4-Becher von 150-50 Sekunden nur bei niedrigen Festkörpern zu erreichen. Bei hohem pH ist sowohl die hydrolytische Stabilität der blockierten Polyisocyanate wie auch die physikalische Absetzstabilität stärker gefährdet, obwohl unter diesen Verhältnissen ein möglichst hoher Festkörper erzielbar wäre. Es gilt also, den Neutralisationsgrad so zu wählen, daß zwischen den oben genannten Anforderungen eine optimale Balance erzielt wird. Bei gegebenem Amingehalt des Epoxy-Amin-Addukts, charakterisiert durch den Basengehalt der Mischung (MEQ-Base in Milliäquivalenten/Gramm Festharz) soll der Neutralisationsgrad zwischen 70 und 10 %, bevorzugt zwischen 40 und 20 % liegen. Als Säuren werden organische Säuren sowie Derivate der Phosphorsäure eingesetzt. Beispiele hierfür sind: Ameisensäure, Essigsäure, Propionsäure, Valeriansäure, Milchsäure sowie unterphosphorige Säure.

Der erfindungsgemäße Primer wird sowohl als organische Verdünnung als auch als wäßrige Verdünnung angewendet. Bei der wäßrigen Verdünnungsform ist insbesondere bevorzugt der Einsatz eines Reaktionsproduktes aus einem Epoxidharz, das mit einer Monophenol- oder Thiolverbindung modifiziert worden ist und Aminen sowie ggfs. Diolen, Dicarbonsäuren und ähnlichen Verbindungen.

Für die organische Verdünnungsform wird vorzugsweise eine Stoffzusammensetzung verwendet, bestehend aus einem mit ethoxiliertem Bisphenol A elastifizierten Epoxy-Amin-Addukt als Hauptharz mit einem Polyisocyanatvemetzer, z.B. Diphenylmethandiisocyanat.

Die Primer werden nach allgemein gut bekannten Methoden hergestellt. Die Synthese der Kunstharze erfolgt nach gut bekannten Methoden (vgl. z.B. DE-PS-27 01 002 und die weiteren auf Seite 1 zitierten Patentdokumente) in organischen Lösemitteln. Die so erhaltenen Kunstharzlösungen bzw. -dispersionen werden in neutralisierter Form in eine wäßrige Phase überführt.

Pigmente können auch in Form einer Pigmentpaste in die wäßrige Dispersion der Harze eingearbeitet werden.

Die Herstellung von Pigmentpasten ist allgemein bekannt und braucht hier nicht näher erläutert zu werden (vgl. D.H. Parker, Principles of Surface Coating Technology, Intersience Publishers, New York (1965); R.L. Yates, Electropainting, Robert Draper Ltd., Teddington/England (1966); H.F. Payne, Organic Coating Technology, Band 2, Wiley and Sons, New York (1961)).

Zur Herstellung der Pigmentpasten werden z.B. quarternäre Ammoniumgruppen enthaltende Epoxid-Aminaddukte eingesetzt.

Die Pigmentpasten können im Prinzip alle für Lacke geeigneten Pigmente enthalten. Im allgemeinen ist Titandioxyd das einzige oder das hauptsächliche weiße Pigment Andere weiße Pigmente oder Streckmittel, wie Antimonoxid, Zinkoxid, basisches Bleicarbonat, basisches Bleisulfat, Bariumcarbonat, Porzellan, Ton, Kalciumcarbonat, Aluminiumsilikat, Siliciumdioxid, Magnesiumcarbonat und Magnesiumsilikat können aber auch verwendet werden. Als farbige Pigmente können beispielsweise Cadmiumgelb, Cadmiumrot, Ruß, Phthalocyaninblau, Chromgelb, Toluidylrot und hydratisiertes Eisenoxid benutzt werden.

Die Pigmentpaste kann neben den Pigmenten auch noch Weichmacher, Füllstoffe, Netzmittel usw. enthalten.

Die Pigmentpaste wird in einer solchen Menge zur wäßrigen Dispersion des Kunstharzes gegeben, daß der fertige Primer die gewünschten Eigenschaften aufweist. In den meisten Fällen beträgt das Gewichtsverhältnis zwischen Pigment und Kunstharz 0,05 bis 0,5.

Die erfindungsgemäßen Primer können neben dem Kunstharz und der Pigmentpaste noch weitere übliche Zusatzstoffe enthalten, wie z.B. Zusatzlösungsmittel, Antioxidantien, oberflächenaktive Mittel usw..

Der Festkörper der erfindungsgemäßen Primer beträgt vorzugsweise 7 bis 35 Gew.-Teile, besonders bevorzugt 12 bis 25 Gew.-Teile.
Die Erfindung betrifft auch ein Verfahren zum Beschichten von Substrate, vorzugsweise aus Metall, bei dem durch Reinigen der Substratoberfläche, ggfs. Auftragen eines anorganischen oder organischen Vorbehandlungsmittels, Aufbringen eines Primers, Aufbringen eines Decklacks durch Spritzen, Rakeln, Tauchen, Walzen oder Streichen und anschließendes Einbrennen.

### Decklacke

Der erfindungsgemäße Primer wird nach dem Auftrag auf das Substrat vorzugsweise mit einem Decklack beschichtet. Diese Decklackierung kann im Anschluß an den Auftrag des Primers oder aber zweckmäßigerweise erst nachdem die mechanische Verformung/Formgebung des mit dem Primer beschichteten Substrats erfolgt ist.

Grundsätzlich können alle handelsüblichen Decklacke zum Einsatz kommen. Solche Lacke sind dem Fachmann für die unterschiedlichsten Anforderungsprofile bekannt.

Die Anforderungen an einen Decklack werden zunächst einmal durch das vorgesehene Einsatzgebiet bestimmt. Im flüssigen Zustand muß er zunächst der hohen Scherbeanspruchung bei der Walzenapplikation standhalten, ohne sich auch bei längerer Verarbeitungszeit zu verändern. Durch eine ausgefeilte Abstimmung zwischen Produktion und Prüfbedingungen wird der vorgegebene Farbton und Glanzgrad exakt erreicht. Die Kaschierung mit Schutzfolie erfordert darüber hinaus eine gezielte Einstellung der Haftkräfte zu dieser Folie. Die normalen Schichtdicken der Decklacke liegen im allgemeinen bei etwa 20 µm.
Als Decklacke sind handelsübliche Coil Coating-Polyester-Descklacke oder Coil Coating-Polyurethan-Decklacke (z.B. Firma BASF Lacke + Farben AG, Merkblätter) verwendbar.

### Mehrschichtiger Aufbau

Bei den erfindungsgemäßen Produkten handelt es sich vorzugsweise um einen Zweischichtenaufbau Primer + Decklack. Die Filmbildung findet zwischen 200 und 260°C in rd. 30 bis 60 sec statt; die üblichen Trockenfilmdicken betragen 25 µm bzw. 100 bis 250 µm.

Über den Lackfilm kann eine bedruckte und dekorativ wirkende Folie oder eine abziehbare Schutzfolie aufgetragen werden. Hierbei handelt es sich vorwiegend um PVC- und PVF-Folien. Diese werden mit einem Haftvermittler in der Wärme verklebt. Die abziehbaren Schutzfolien werden kalt verklebt oder in der Wärme haftend aufgebracht. Auf der Blechrückseite befindet sich meist eine ein- oder zweischichtig aufgetragene (Schutz-) Lackierung von 5 bis 15 µm Dicke.

Als Besonderheiten sind Stukturlackierungen und Kombinationen von Lackierung und transparenter Folie zu nennen, die vor allem in der Hausgeräteindustrie eingesetzt werden. Drei- und Vierschichtensysteme werden für besonders anspruchsvolle Anwendungen im Außeneinsatz hergestellt.

Für die Automobilindustrie werden bandbeschichtete verzinkte Werkstoffe eingesetzt. Es handelt sich dabei vorzugsweise um eine 1 bis 3 µm dünne Versiegelung, Zinkstaublackierung, schweißbare oder nichtschweißbare Grundierungen ("preprimed") und dickere Systeme bis 50 µm, die sich für unterschiedliche Anforderungen bei Karosserie- oder Anhängeteilen eignen.

Verbundblech im dreischichtigen Aufbau wird mit einer Gesamtdicke von 0,8 bis 2,0 mm hergestellt, und zwar in symmetrischem oder asymmetrischem Querschnitt. Als Deckbleche können alle Blechsorten eingesetzt werden, auch z.B. Edelstahl oder Aluminium. Die viskoelastische Zwischenschicht mit hoher innerer Reibung hat eine Dicke von 25 bis 50 µm. Je nach dem erforderlichen Arbeitsbereich gibt es den Typ 1 mit einem hohen Veriustfaktor (als Maß für die Dämpfung) für den Einsatz zwischen rd. -10 und +60°C (z.B. für Garagen-Schwingtore und Glasabfallsammelbehälter), und den Typ 2 für den Einsatz zwischen rd. 50 und 130°C (vor allem bei Automobil-Zubehörteilen wie Ölwannen und Ventildeckel).

### Einsatzgebiete

Die Erfindung betrifft ferner die Verwendung der beschichteten Substrate zur Herstellung von Bauzubehör, Möbeln, Geräteverkleidung, Fahrzeugkarosserien, Haushaltsgeräten und Lampengehäusen. Ein besonders bevorzugtes Gebiet sind Bereiche, bei denen kleine Radien zu biegen sind, wie dies z.B. bei Fahrzeugkarosserien der Fall ist.

Die Erfindung wird in den folgenden Beispielen näher erläutert. Alle Angaben über Teile und Prozentsätze sind Gewichtsangaben, falls nicht ausdrücklich etwas anderes festgestellt wird.

Für viele Anwendungen ist die einschichtige Oberflächenlackierung ausreichend. Insbesondere die Rückseiten der beschichteten Coils sind nur einschichtig lackiert.

Dabei werden als Rückseitenlacke die erhndungsgemäßen Primer eingesetzt, weil sie ein exzellentes Haftungs- und Korrosionsschutzverhalten haben. Auch auf der Sichtseite werden häufig Einschichtlacke in Form der erfindungsgemäßen Primer eingesetzt. So ist es für einige Innenanwendungen im Baubereich ausreichend mit einer einschichtigen 20 bis 22 µm dicken Lackschicht zu arbeiten. Auch im Verpackungsbereich werden nur einschichtig lackierte Coils eingesetzt.

Im folgenden soll auf die einzelnen Einsatzgebiete noch detaillierter eingegangen werden.

### Architektur außen

Für Fassaden und Dächer, aber auch für Bauzubehörteile, wie Türen, Tore und Fensterrahmen, wird vorzugsweise als erste Schicht mit 5 - 8 µm der erfindungsgemäße Primer aufgetragen. Anschließend kommt ein Decklack zum Einsatz. Nach der Trocknung wird mit einer Polyethylenfolie der Schutz vor mechanischen Verletzungen bei der weiteren Verarbeitung gewährleistet. Diese Folie wird nach der Bauteilmontage vom Objekt wieder abgezogen.

Die Rückseite kann z.B. mit dem erfindungsgemäßen Primer beschichtet werden, der bei der Bauteilherstellung schließlich mit einem Polyurethan-Hartschaum zur Wärmeisolierung angeschäumt wird. Entsprechend muß das Haftungsverhalten gegenüber Polyurethan-Schaum bei so einem Rückseitenlack optimal eingestellt sein.

Für die Substrate Normalstahl, feuerverzinkt, elektrolytisch verzinkt und Galfan können die erfindungsgemäßen Primer ebenfalls eingesetzt werden. Auf die vorzugsweise 5 - 8 µm dicke Primerschicht wird, je nach Farbton, der CD 24- Decklack mit vorzugsweise 18 - 22 µm aufgetragen. In diesem Glanzgradbereich von 20 - 70 Einheiten zeichnet sich dieser Decklack durch eine gute Härte, dargestellt durch die Bleistifthärte F, und eine Flexibilität, gemessen an der Biegung von ≤ T3,0 aus. Neben diesen für die weitere mechanische Bearbeitung wichtigen Grunddaten spielt natürlich das Langzeitverhalten der fertigen Bauteile die entscheidende Rolle. Die Wetterbeständigkeit ist für einen Zeitraum von 5 - 10 Jahren angesetzt. Das bedeutet, daß nach diesem Zeitraum Glanzgrad und Farbton sich nur wenig verändert haben und Korrosionen an Kanten und Verletzungsstellen sich nur innerhalb eines eng gefaßten Rahmens bewegen. Natürlich sind die einzelnen Bewitterungsdaten abhängig von dem jeweils betrachteten Farbton, da auch die Pigmente unterschiedliches Bewitterungsverhalten zeigen.

### Architektur, Innenbereiche

Für die Herstellung von Deckendelementen, Trennwänden, Regalen, Ladenbau, Stahlmöbeln und vielem mehr, wird auf das verwendete Substrat im allgemeinen zunächst der erfindungsgemäße Primer aufgetragen. Die vorzugsweise 5 - 8 µm dicke Schicht wird anschließend mit einem Decklack weiter beschichtet, auf den ggf. noch eine temporäre Schutzfolie aufgetragen wird.

Für Teile, die besonders starker mechanischer Beanspruchung unterworfen sind, ist auch ein Strukturlacksystem einsetzbar. Hier ist aufgrund der Berg- und Talstruktur die Verletzungsanfälligkeit gegen mechanische Verletzungen relativ klein. Die Gesamtschichtdicke liegt bei etwa 32 - 35 µm, wobei der Strukturlack selbst 12 - 15 µm, je nach Strukturausprägung, benötigt. Je nach System wird hier eine Biegefähigkeit von T 0,5 - T 2,5 erreicht. Als Einsatzgebiete kommen im Innenbereich Trennwände, Deckenelemente und vor allem Kühlhausverkleidungen sowie Regal-, Lager- und Ladenbausysteme in Frage. Aber auch im Außenbereich werden diese Strukturlacke für Jalousien, Rolläden, Türen und Tore eingesetzt.

### Weiße Ware

Unter Weiße Ware werden Lampen und Leuchten sowie elektrische Hausgeräte, wie Kühlschränke, Gefriergeräte, Waschmaschinen, Wäschetrockner, Geschirrspülmaschinen, Mikrowellenöfen und Dunstabzugshauben verstanden.

Der Aufbau für Lampen und Leuchten besteht erfindungsgemäß aus einem weißen Primer und einem Decklack. Dieses System zeichnet sich durch eine gute Oberflächenhärte bei normalen Verfonnungseigenschaften aus. Der lichttechnisch wichtige Reflexionsgrad ist bei dieser glänzenden Qualität besonders optimiert.

Insbesondere für Langfeldleuchten mit sehr komplizierten und engen Biegeradien ist das Zweischichtsystem entwickelt worden. Hier wird auf Normalstahl und Aluminium eine exzellente Biegefähigkeit mit T 0 - T 0,5 erreicht. Die Besonderheit dieses Aufbaus liegt darin, daß der Lack gleichzeitig Primer als auch Decklack ist. Der Gesamtlackaufbau besteht aus 2 x 13 µm des erfindungsgemäßen Primers. Neben den guten mechanisch-technologischen Eigenschaften ist dieses Primersystem so konzipiert, daß es trotz des hohen Glanzes mit > 80 Einheiten bei entsprechender Anlageneinstellung mit mehr als 70 m/min gefahren werden kann.

Bei den elektrischen Hausgeräten werden heute prinzipiell zwei verschiedene Systeme unterschieden. Wird eine glatte Obertläche gefordert, erfolgt der Aufbau wie auch bei den bisher beschriebenen Systemen. Zum Erreichen einer Oberfläche, die eine Struktur aufweist wie eine konventionell im Spritzverfahren lackierte, wird zunächst ein strukturierter erfindungsgemäßer Primer aufgetragen. Über den anschließend ein glatter Decklack gebracht wird.

Grundsätzlich sind die Anforderungen für unterschiedliche Hausgeräte auf die spätere Verwendung abgestimmt. Während bei Kühlschränken ein besonderes Augenmerk auf Fleckenbeständigkeit gegenüber verschiedenen Lebensmitteln gelegt wird und die äußere Oberfläche bei der Kühl- oder Gefrierschrankherstellung von übergetretenem Polyurethanschaum, der als Wärmeisolation eingesetzt wird, leicht zu reinigen sein muß, erfordert die Beschichtung einer Waschmaschinenoberfläche eine besonders gute Beständigkeit gegen Detergenzien. Die Anforderungen für Geschirrspülmaschinen und Wäschetrockner sind ähnlich denen der Waschmaschine.

Insgesamt sind die Anforderungen an die lackierte Oberfläche recht hoch bezüglich der Kombination aus Oberflächenhärte, guter Verformbarkeit und Chemikalien- oder Lebensmittelbeständigkeit, die von den erfindungsgemäß eingesetzten Primer in besonderer Weise erfüllt werden.

### Fahrzeugbau

Im Fahrzeugbau kommen sehr unterschiedliche Anwendungen zum Tragen. Insgesamt müssen bei solchen Spezialitäten die Substrate, Vorbehandlung und der Lack sehr ausgewogen aufeinander abgestimmt werden. Hierbei lassen sich die oben beschriebenen Primer mit besonderem Vorteil einsetzen.

### Herstellungsverfahren

Das Substrat, ein Band, das vorzugsweise aus Stahl oder Aluminium besteht, durchläuft mit einer definierten Geschwindigkeit die gesamte kontinuierliche Bandbehandlungsanlage. Dabei wird es einer Mehrstufenbehandlung unterzogen, die aus folgenden Arbeitsschritten besteht: Reinigen, Vorbehandeln, Aufbringen der organischen Beschichtungen, Einbrennen/Trocknen in den Durchlauföfen und Aufcoilen bzw. Abtafeln des beschichteten Produktes.

Genau genommen teilt sich der Arbeitsgang bei der typischen Flüssigbeschichtung in 11 Arbeitsschritte auf.

Die Bandgeschwindigkeit liegt erfindungsgemäß vorzugsweise im Bereich von 30 bis 120 (m/min).

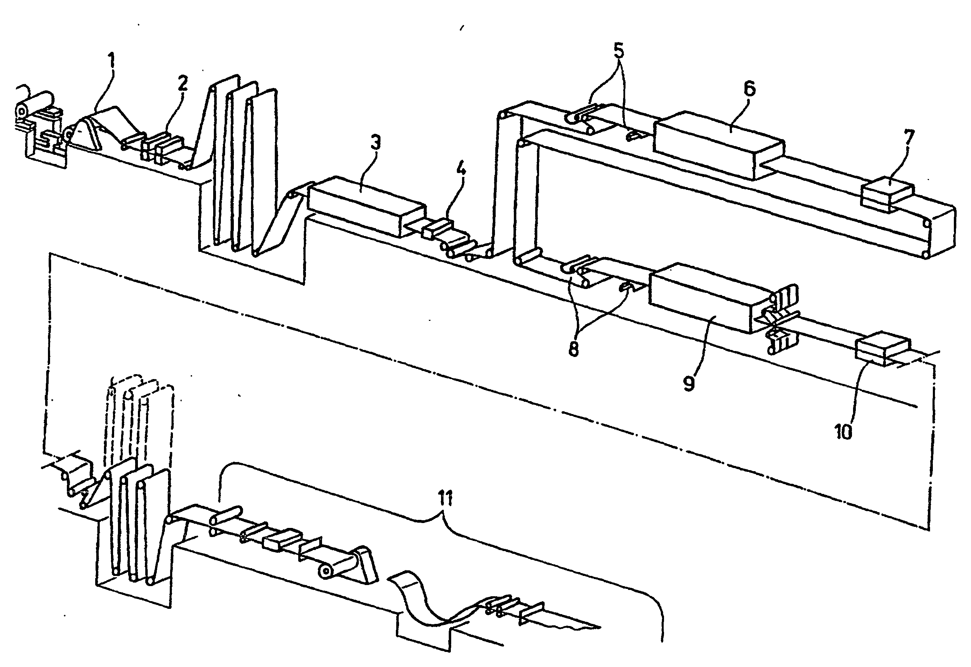

Im folgenden wird die Erfindung unter Bezugnahme auf die Figur näher beschrieben:

In Abschnitt 1 findet das sogenannte Abcoilen des metallischen Trägerwerkstoffes vom Ablaufhaspel statt In Stufe 2 kommt es zu dem mechanischen Zusammenheften des Anfangs des zu behandelnden Bandes an das Ende des im Beschichtungsdurchlauf befindlichen Bandes. In Abschnitt 3 findet die Vorreinigung des Bandes statt. Hierbei kommt es zu einer Streckricht-Behandlung, um eine gute Planlage zu gewährleisten. Die Reinigung erfolgt mit sauren oder alkalischen Lösungen. Daran schließt sich eine chemische Vorbehandlung an.

Je nach der weiteren Behandlung kommt es in der Stufe 4 zum Spülen, Neutralisieren und Trocknen. In Stufe 5 erfolgt das Auftragen des Primers, wobei das Band entweder ein- oder beidseitig beschichtet wird. Danach erfolgt der Durchlauf durch einen ersten Ofen 5.

Im Anschluß hieran wird das Band über die Abkühlstrecke 7 geführt- Hiernach kommt es in der Anlage 8 zu einer ein- oder beidseitigen Beschichtung mit Decklack.

In der Vorrichtung 9 kann es wahlweise zu einem Prägen der Beschichtung oder zu einem Durchlauf durch einen zweiten Ofen bzw. wahlweise zum Aufbringen einer Schutzfolie kommen.

Daran schließt sich die Kühlstrecke 10 an. Abschließend wird in dem Abschnitt 11 die Qualitätskontrolle durchgeführt (visuelle Oberflächeninspektion, Stichproben und Tests). Schließlich kommt es zu dem sogenannten Aufcoilen sowie ggfs. Langsteilen (Spalten) oder Abtafeln und Verpacken.

Im folgenden wird die Erfindung unter Bezugnahme auf die Beispiele bezüglich der eingesetzten Lacke näher beschrieben:

### Beispiele 1-4:

### 1. Herstellung eines Vernetzers (Vernetzer A):

In einem Reaktor, der mit einem Rührer, Rückflußkühler, Innenthermometer und Inertgaseinleitung ausgestattet ist, werden 1133 Teile Toluylendiisocyanat (2,4-, bzw. 2,6-Isomerenmischung 80:20) und 356 Teile MIBK unter Stickstoffatmosphäre vorgelegt. Man gibt 0,7 Teile Dibutylzinndilaurat zu und trägt innerhalb von 4 Stunden 290 Teile Trimethylolpropan in Form kleiner Portionen in gleichen Zeitabständen so ein, daß die Innentemperatur nicht über 45 °C steigt. 30 Min. später wird ein NCOÄquivalentgewicht von 217 gemessen (bezogen auf Festanteile). Unter weiterer Kühlung läßt man innerhalb 1 Std 722 Teile n-Propylglykol zutropfen. Am Ende der Zugabe heizt man auf 100 °C und läßt eine weitere Std. nachreagieren. Zu diesem Zeitpunkt sind keine NCO-Gruppen mehr nachweisbar.

Man kühlt sodann ab und verdünnt mit 500 Teilen MIBK auf einen Festkörper von 70% (1 Std. bei 130 °C).

### 2. Herstellung eines Vernetzers (Vernetzer B):

In einem geeigneten Reaktionsgefäß werden unter Stickstoff 2440 Teile triisocyanuratisiertes Hexamethylendiisocyanat vorgelegt und mit 850 Teilen Methylisobutylketon (MIBK) verdünnt. Man erwärmt auf 50 °C und läßt 1560 Teile Di-nbutylamin in einer solchen Geschwindigkeit zulaufen, daß die Temperatur unter äußerer Kühlung bei 60-70 °C zu halten ist. Nach Ende des Zulaufs erhöht man die Temperatur auf 75 °C, hält sie eine Stunde und fügt 150 Teile n-Butanol zu. Das Isocyanatäquivalent sowie das Aminäquivalent liegt jeweils oberhalb 20000. Der Festkörper des Produkts liegt bei 79,6% (1 h bei 130 °C).

### 3. Herstellung eines aminbasischen Hauptharzes:

In einem wärmeträgerölbeheizten Laborreaktor, ausgestattet mit Rührer, Rückflußkühler, Thermometer und Inertgaseinleitungsrohr, werden 1960 Teile eines handelsüblichen Epoxidharzes auf Basis Bisphenol A mit einem Äquivalentgewicht von 490 (Epikote 1 001, Firma Shell) in Gegenwart von 220 Teilen Nonylphenol und 111 Teilen Xylol bei 125 °C aufgeschmolzen. Wenn die Schmelze klar ist, kreist man 20 Minuten lang unter Vakuum anhaftende Feuchtigkeitsspuren über einen Wasserabscheider aus. Dann gibt man 3,5 Teile N,N-Dimethylbenzylamin zu und führt die Reaktion bei 130 °C bis zu einem Epoxidäquivalentgewicht (EEW) von 1080. Sodann kühlt man und verdünnt währenddessen mit 142 Teilen Butylglykol und 254 Teilen Xylol. Bei 90 °C gibt man 147 Teile Diethanolamin zu und reagiert für 1 Stunde. Anschließend wird mit 107 Teilen Propylenglykolphenylether und 400 Teilen Isobutanol verdünnt und weiter gekühlt. Bei 70 °C gibt man 46 Teile N,N-Dimethylaminopropylamin zu, erwärmt auf 90 °C und hält für 2 Stunden bei dieser Temperatur. Danach kühlt man und trägt aus. Das Harz hat einen Festgehalt von 70% und eine Viskosität von 3,8 dpas (40%-ig in Propylenglykol-methylether; Platte-Kegel-Viskosimeter bei 23 °C),

### 4. Beispiele für die Herstellung der erfindungsgemäßen Primer

### Beispiel 1: Organisch gelöste Harz-Vemetzer-Mischung (BM 1)

916,7 Teile des obigen Harzes (Pkt.3) werden mit 252 Teilen des Vernetzers A (Pkt.1), 220,5 Teilen Vernetzer B (Pkt.2), 43,2 Teilen Plastilit 3060 (Weichmacher, Fa. BASF) und 4,2 Teilen Dibutylzinndilaurat (handelsübliche Lösung) vermischt. Nachdem die Mischung homogenisiert ist, wird mit 639 Teilen MIBK verdünnt (Festkörper 50% theoretisch).

### Beispiel 2: Wäßrige Harz-Vernetzer-Mischung (BM 2)

916,7 Teile des obigen Harzes (Beispiel 1), 252 Teile des Vernetzers A (Pkt.1), 220,5 Teile Vernetzer B (Pkt.2), 43,2 Teile Plastilit 3060 (Weichmacher, Fa. BASF) und 4,2 Teile Dibutylzinndilaurat (handelsübliche Lösung) werden bei Raumtemperatur vermischt. Man fügt 2,1 Teile einer Entschäumerlösung (Surfynol 104; Air Products; 50 %-ige Lösung in Butylglykol) und 23,8 Teile Eisessig zu und verdünnt unter Rühren mit 682 Teilen vollentsalztem Wasser bis zu einer Auslaufviskosität von 70 sec. (DIN 4-Becher). Der Festkörper der wäßrigen Mischung liegt bei 46,0 % (1 Std. bei 130 °C ). Der Festkörperanteil weist eine MEQ-Base von 0,68 und eine MEQ-Säure von 0,17 auf jeweils Milliäquivalente/g).

### Beispiel 3: Wäßrige Harz-Vernetzer-Mischung (BM 3)

Das in Beispiel 2 beschriebene BM 2 wird wiederholt, jedoch mit dem Unterschied, daß Dibutylzinndilaurat mengengleich durch eine Bleioctoatlösung ersetzt wird. Der Festkörper der Mischung liegt bei 45,2% . Die MEQ-Base liegt bei 0,67 und die MEQ-Säure bei 0,17 Milliäquivalente/g Festkörper.

### 5. Anwendungstechnische Versuche

Die obenstehend beschriebenen Bindemittel gemäß Beispielen 1 bis 5 werden mittels einer Rakel (Stab Nr.10) auf feuerverzinkte Stahltafeln (Bonder 1303, Fa. Chemetall) aufgezogen und unter Coil Coating-Bedingungen mit einer mittleren Peaktemperatur von 216 °C eingebrannt

Zum Vergleich wurde ein Primer nach dem Stand der Technik geprüft.

### Ergebnistabelle:

| Prüfungen | Einheit | BM 1 | BM 2 | BM 3 | CP21-0916 Standard¹⁾ |
|---|---|---|---|---|---|
| Schichtdicke | µm | 5 | 5 | 5-6 | 5 |
| MEK-Test²⁾ | DH | 13 | 11 | 15 | 15 |
| Salzsprühtest | 1008 h | | | | |
| Unterwande- | mm | 0 | 0,5 | 0,5 | 1-2 |
| rung am | | | | | |
| Schnitt | | | | | |
| Unterwanderung an der Kante | mm | 3-4 | 1-3 | 1-3 | 1-2 |
| T-Bend³⁾ | TO | TO | TO | TO | TO |

| | | | | | |
|---|---|---|---|---|---|
| ¹⁾ Chromatfreier Primer der FA.BASF als Vergleich | | | | | |
| ²⁾ Vernetzungstest: Anzahl der Doppelhübe (DH) mit einem mit Methylethylketon getränkten Wattebausch bis zur Zerstörung des Films | | | | | |
| ³⁾ Flexibilitätstest gemäß ECCA T7 | | | | | |

Die Tabelle zeigt, daß die Unterwanderung am Schnitt erfindungsgemäß bei ≤ 0,8 mm liegt, während die beim Vergleichsbeispiel 1-2 mm sind.

### Beispiel für einen pigmentierten Coil Coating Primer:

| | |
|---|---|
| 32,38 | Teile des modifizierten Epoxidharzes aus Beispiel 4, Unterbeispiel 5.a. |
| 0,23 | Teile Aerosil 200 100%, |
| 4,16 | Teile Finn Talkum M5 Micro |
| 16,96 | Teile Titan Rutil RR2 EI.Arm |
| 4,32 | Teile Shieldex CP4-7394 |
| 5,86 | Teile Sicor ZNP/S |
| 7,71 | Teile Solvesso 150 |
| 7,71 | Teile Butylglykol |

werden im Dissolver 10 min. lang vorgemischt und anschließend in einer Sandmühle während 25 min. auf eine Feinheit von 13 - 15 um gemahlen. Dieser Stammlackpaste werden nachfolgend

| | |
|---|---|
| 9,25 | Teile des modifizierten Epoxidharzes aus Beispiel 4, Unterbeispiel 5.a. |
| 10,49 | Teile des Vernetzers aus Beispiel 4, Unterbeispiel 5.b. und |
| 0,93 | Teile Monobutylzinnoxid-Lösung |

zugesetzt, und die Mischung wird gründlich homogenisiert. Der so erhaltene Primer wird mittels einer Rakel (Stab Nr. 10) sowohl auf feuerverzinkte Stahltafeln (Bonder 1303, Fa. Chemetall) wie auf galvanisiertes Stahlblech (Granodine 108, chromatiert, Fa. Henkel) aufgezogen und unter den obenstehenden Bedingungen bei 216°C Peaktemperatur eingebrannt.

### Ergebnistabelle:

| Prüfungen Substrate: | feuerverzi | galvanisiert |
|---|---|---|
| Schichtdicke [gm] | 5 | 5 |
| MEK-Test [DH] Salzsprühtest 1008 h: | >30 | >30 |
| nterwanderung am Schnitt[mm] | <2 | 0,5 |
| Unterwanderung an der Kante [mm] | <2 | 1 |
| T-Bend | 035 | TO |

## Patentansprüche

1. Verfahren zur Beschichtung von Substraten, vorzugsweise aus Metall, durch Reinigen der Substratoberfläche, ggfs. Auftragen eines anorganischen und/oder organischen Vorbehandlungsmittels, Aufbringen eines Primers, Auftragen eines Decklacks durch Spritzen, Tauchen, Rakeln, Walzen oder Streichen,
**dadurch gekennzeichnet, daß** der Primer ein aminmodifiziertes Epoxidharz enthält, das ein Reaktionsprodukt aus einem Epoxidharz, das mit einer Monophenol- oder thiolverbindung modifiziert worden ist, primären und/oder sekundären Aminen bzw. deren Salzen und/oder Salzen von tertiären Aminen und ggfs. Diolen und/oder Dicarbonsäuren ist.

2. Verfahren nach Anspruch 1,
**dadurch gekennzeichnet, daß** der Primer in organisch oder wäßrig verdünnter Form vorliegt.

3. Mit einem oder mehreren Schichten beschichtete Substrate, vorzugsweise aus Metall, die herstellbar sind, indem die Substratoberfläche gereinigt, ggfs ein anorganisches und/oder organisches Vorbehandlungsmittel aufgetragen, eine Primerschicht aufgebracht, ggfs: eine Decklackschicht oder mehrere Decklackschichten durch Spritzen, Tauchen, Rakeln, Walzen oder Streichen aufgetragen, anschließend eingebrannt und ggfs. eine abziehbare Folie über die Lackschicht geschichtet wird,
**dadurch gekennzeichnet**,daßinwenigstenseiner Lackschicht der Primer ein Amin modifiziertes Epoxidharz enthält, das ein Reaktionsprodukt aus einem Epoxidharz, das mit einer Monophenol- oder thiolverbindung modifiziert worden ist, primären und/oder sekundären Aminen bzw. deren Salzen und/oder Salzen von tertiären Aminen und ggfs. Diolen und/oder Dicarbonsäuren ist.

4. Beschichtetes Substrat nach Anspruch 3,
**dadurch gekennzeichnet**,daßderPrimerKunstharzein organisch oder wäßrig verdünnter Form enthält.

5. Beschichtetes Substrat nach Anspruch 4,
**dadurch gekennzeichnet**,daßdieKomponenteA herstellbar ist durch Umsetzung von
a) einer Diepoxidverbindung oder eines Gemisches von Diepoxidverbindung mit einem Epoxidäuquivalentgewicht von unter 2000 mit
b) einer unter den gegebenen Reaktionsbedingungen gegenüber Epoxidgruppen monofunktionell reagierenden, eine Phenol- oder Thiolgruppe enthaltenden Verbindung oder eines Gemisches solcher Verbindung,
wobei die Komponenten a) und b) in einem Molverhältnis von 10:1 bis 1:1, bevorzugt 4:1 bis 1,5:1, eingesetzt werden und die Umsetzung der Komponente a) mit der Komponente b) bei 100 bis 190 °C ggfs. in Anwesenheit eines Katalysators durchgeführt wird.

6. Verwendung der beschichteten Substrate nach einem der Ansprüche 3 bis 5 zur Hersteliung von Bauzubehör, Möbeln, Geräteverkleidungen, Fahrzeugkarosserien, Haushaltsgeräten und Lampengehäusen.

## Claims

1. A method of coating substrates, preferably of metal, by cleaning the substrate surface, applying, if desired, an organic and/or inorganic pretreatment composition, applying a primer, applying a topcoat by spraying, dipping, knifecoating, rollercoating or brushing, wherein the primer comprises an amine-modified epoxy resin which is a reaction product of an epoxy resin which has been modified with a monophenol compound or thiol compound, primary and/or secondary amines and/or their salts and/or salts of tertiary amines and, if desired, diols and/or dicarboxylic acids.

2. The method as claimed in claim 1, wherein the primer is present in organically or aqueously diluted form.

3. A substrate, preferably of metal, which is coated with one or more coats and can be prepared by cleaning the substrate surface, applying, if desired, an organic and/or inorganic pretreatment composition, applying a primer coat, optionally applying a topcoat or a plurality of topcoats by spraying, dipping, knifecoating, rollercoating or brushing, then baking and, if desired, layering a removable sheet over the coating film, wherein the primer in at least one coating film comprises an amine-modified epoxy resin which is a reaction product of an epoxy resin which has been modified with a monophenol compound or thiol compound, primary and/or secondary amines and/or their salts and/or salts of tertiary amines and, if desired, diols and/or dicarboxylic acids.

4. The coated substrate as claimed in claim 3, wherein the primer comprises resins in organically or aqueously diluted form.

5. The coated substrate as claimed in claim 4, wherein component A can be prepared by reacting
a) a diepoxide compound or a mixture of diepoxide compounds having an epoxide equivalent weight of less than 2000 with
b) a compound which under the given reaction conditions reacts monofunctionally with respect to epoxide groups and includes a phenol or thiol group, or a mixture of such compounds, components (a) and (b) being employed in a molar ratio of from 10:1 to 1:1, preferably from 4:1 to 1.5:1, and the reaction of component (a) with component (b) being conducted at from 100 to 190°C in the presence or absence of a catalyst.

6. The use of the coated substrate as claimed in any one of claims 3 to 5 to produce construction accessories, furniture, instrument paneling, vehicle bodies, domestic appliances and lamp casings.

## Revendications

1. Procédé pour le revêtement de subjectiles, de préférence en métal, par nettoyage de la surface du subjectile, éventuellement application d'un agent organique et/ou minéral de prétraitement, application d'un primaire, application d'une peinture de finition par pistolage, trempage, enduction à la racle, enduction au rouleau ou enduction au pinceau, **caractérisé en ce que** le primaire contient une résine époxy modifiée par une amine, qui est un produit de réaction obtenu à partir d'une résine époxy qui a été modifiée par un monophénol ou un monothiol, d'amines primaires et/ou secondaires ou de leurs sels et/ou de sels d'amines tertiaires et éventuellement de diols et/ou d'acides dicarboxyliques.

2. Procédé selon la revendication 1, **caractérisé en ce que** le primaire se trouve sous forme diluée avec des diluants aqueux ou organiques.

3. Subjectiles, de préférence en métal, revêtus d'une ou plusieurs couches, qui peuvent être obtenus par nettoyage de la surface du subjectile, application d'un agent organique et/ou minéral de prétraitement, application d'une couche de primaire, éventuellement application d'une couche de peinture de finition ou de plusieurs couches de peinture de finition par pistolage, trempage, enduction à la racle, enduction au rouleau ou enduction au pinceau, ensuite séchage au four et éventuellement application d'une pellicule pelable sur la couche de peinture, **caractérisés en ce que** dans au moins une couche de peinture, le primaire contient une résine époxy modifiée par une amine, qui est un produit de réaction obtenu à partir d'une résine époxy qui a été modifiée par un monophénol ou un monothiol, d'amines primaires et/ou secondaires ou de leurs sels et/ou de sels d'amines tertiaires et éventuellement de diols et/ou d'acides dicarboxyliques.

4. Subjectile revêtu selon la revendication 3, **caractérisé en ce que** le primaire contient des résines synthétiques sous forme diluée avec des diluants aqueux ou organiques.

5. Subjectile revêtu selon la revendication 4, **caractérisé en ce que** le composant A peut être préparé par réaction
a) d'un diépoxyde ou d'un mélange de diépoxydes ayant un poids d'équivalent époxyde inférieur à 2 000 avec
b) un composé contenant un groupe phénol ou thiol, et réagissant de façon monofonctionnelle vis-à-vis des groupes époxy dans les conditions réactionnelles données, ou un mélange de tels composés,
les composants a) et b) étant utilisés en un rapport molaire de 10:1 à 1:1, de préférence de 4:1 à 1,5:1 et la réaction du composant a) avec le composant b) étant effectuée à 100-190°C, éventuellement en présence d'un catalyseur.

6. Utilisation des subjectiles revêtus selon l'une quelconque des revendications 3 à 5, pour la fabrication d'accessoires pour le bâtiment, de meubles, d'habillages d'appareils, de carrosseries de véhicules, d'appareils ménagers et de boîtiers de lampes.
